# EUROPEAN PATENT APPLICATION

(11) **EP 4 608 056 A1**
(43) Date of publication of application: **27.08.2025**
(21) Application number: 25157309.3
(22) Date of filing: 12.02.2025
(51) Int. Cl.: H04W 76/15, H04W 52/02, H04W 84/12

(54) **ENHANCED POWER MANAGEMENT TECHNIQUES FOR MULTI-LINK OPERATION**

(30) Priority: 26.02.2024 US 202463557942 P; 25.11.2024 US 202418959198
(71) Applicant: Apple Inc., Cupertino, CA 95014 (US)
(72) Inventor: MEHRNOUSH, Morteza, Cupertino, California, 95014 (US); LAN, Zhou, Cupertino, California, 95014 (US); GHOSH, Chittabrata, Cupertino, California, 95014 (US); BATRA, Anuj, Cupertino, California, 95014 (US); LIU, Yong, Cupertino, California, 95014 (US)
(74) Representative: Simmons & Simmons

(57) **Abstract**

A method can include establishing at least two wireless links with an access point (AP) multi-link device (MLD) comprising at least a first AP and a second AP and receiving, from the AP MLD, signaling comprising first timing information. The method can include determining, based on the first timing information, second timing information and transmitting a frame comprising a link identifier (ID) associated with at least one of the at least two wireless links, a power management (PM) mode indicator, and the second timing information. Additionally, the method can include receiving an acknowledgement (ACK) frame, wherein subsequent to receiving the ACK frame and based on the link ID and the PM mode indicator, one or more non-AP stations (STAs) of a non-AP MLD are transitioned, at a time associated with the second timing information, to a power saving (PS) mode.

## Description

### FIELD

The present application relates to wireless communications, including enhanced techniques for power management in multi-link operation among wireless stations and/or access points in a wireless networking system.

### DESCRIPTION OF THE RELATED ART

Wireless communication systems are rapidly growing in usage. Further, wireless communication technology has evolved from voice-only communications to also include the transmission of data, such as Internet and multimedia content. A popular short/intermediate range wireless communication standard is wireless local area network (WLAN). Most modern WLANs are based on the IEEE 802.11 standard (and/or 802.11, for short) and are marketed under the Wi-Fi brand name. WLAN networks link one or more devices to a wireless access point, which in turn provides connectivity to the wider area Internet.

In 802.11 systems, devices that wirelessly connect to each other are referred to as "stations", "mobile stations", "user devices", "user equipment", or STA or UE for short. Wireless stations can be either wireless access points or wireless clients (and/or mobile stations). Access points (APs), which are also referred to as wireless routers, act as base stations for the wireless network. APs transmit and receive radio frequency signals for communication with wireless client devices. APs can also couple to the Internet in a wired and/or wireless fashion. Wireless clients operating on an 802.11 network can be any of various devices such as laptops, tablet devices, smart phones, smart watches, or fixed devices such as desktop computers. Wireless client devices are referred to herein as user equipment (and/or UE for short). Some wireless client devices are also collectively referred to herein as mobile devices or mobile stations (although, as noted above, wireless client devices overall can be stationary devices as well).

Mobile electronic devices can take the form of smart phones or tablets that a user typically carries. Wearable devices (also referred to as accessory devices) are a newer form of mobile electronic device, one example being smart watches. Additionally, low-cost low-complexity wireless devices intended for stationary or nomadic deployment are also proliferating as part of the developing "Internet of Things". In other words, there is an increasingly wide range of desired device complexities, capabilities, traffic patterns, and other characteristics.

Some WLANs can utilize multi-link operation (MLO), e.g., using a plurality of channels (e.g., links) concurrently. APs and/or STAs capable of MLO can be referred to as multi-link devices (MLD). For example, APs capable of MLO can be referred to as AP-MLDs and STAs capable of MI,O that are not acting as APs can be referred to as non-AP MLDs. Improvements in the field are desired.

### SUMMARY

Embodiments described herein relate to methods, systems and apparatuses for enhanced power management techniques in multi-link operation among wireless stations and/or access points in a wireless networking system.

In some embodiments, a method can include establishing at least two wireless links with an access point (AP) multi-link device (MLD) comprising at least a first AP and a second AP and receiving, from the AP MLD, signaling comprising first timing information. The method can include determining, based on the first timing information, second timing information and transmitting a frame comprising a link identifier (ID) associated with at least one of the at least two wireless links, a power management (PM) mode indicator, and the second timing information. Additionally, the method can include receiving an acknowledgement (ACK) frame, wherein subsequent to receiving the ACK frame and based on the link ID and the PM mode indicator, one or more non-AP stations (STAs) of a non-AP MLD are transitioned, at a time associated with the second timing information, to a power saving (PS) mode.

According to some embodiments, the second timing information can include a timing synchronization function (TSF). Additionally, the first timing information can include cross link information exchange timing between any two APs of the AP MLD, according to some embodiments. According to some embodiments, the cross link information exchange timing can be received during one of an association procedure, a beaconing procedure, or an enhanced multi-link (EML) operating mode notification (OMN) request and response mechanism. In some embodiments, the signaling can include information indicating which of the at least two wireless links support cross link signaling. Furthermore, the second timing information can include a timing offset or an absolute timing synchronization function (TSF) between a time at which the frame is transmitted and a time at which the one or more non-AP STAs are transitioned to the PS mode. According to further embodiments, the frame can further include duration information associated with a duration of time in which the one or more non-AP STAs are in the PS mode. Additionally, the frame can be a power management indication (PMI) frame.

In some embodiments, an apparatus can include a processor configured to, when executing instructions stored in a memory, cause a non-access point (non-AP) multi-link device (MLD) comprising one or more non-AP stations (STAs) to perform operations including establishing at least two wireless links with an access point (AP) MLD comprising at least a first AP and a second AP. Additionally the operations can include receiving, from the AP MLD, signaling comprising first timing information and determining, based at least in part on the first timing information, second timing information. Furthermore, the operations can include transmitting, to the AP MLD, a frame comprising at least one link identifier (ID) associated with at least one of the at least two wireless links, a power management (PM) mode indicator, at least a portion of the second timing information, and duration information. The operations can additionally include receiving, from the AP MLD, an acknowledgement (ACK) frame, wherein subsequent to receiving the ACK frame and based at least in part on the at least one link ID and the PM mode indicator, the one or more non-AP STAs of the non-AP MLD are transitioned from a power saving (PS) mode to an active mode at a time associated with the second timing information, according to some embodiments.

According to some embodiments, the PM mode indicator can be a bit value equal to 0 to indicate the transition of the one or more non-AP STAs to the active mode. Additionally or alternatively, the frame can be transmitted using A-Control field signaling. In some embodiments, the A-Control field signaling can include at least one of an 8-bit Link-ID subfield, a 1-bit PM mode subfield, an 8-bit Timing Offset subfield, an 8-bit Duration subfield, or an 1-bit Reserved subfield. According to some embodiments, the A-Control field signaling can be included in a media access control protocol data unit (MPDU), a control response (CR) frame, or a quality of service null (QN) frame.

According to other embodiments, a method can include establishing at least two wireless links with a non-access point (non-AP) multi-link device (MLD) comprising at least two non-AP stations (STAs). The method can further include transmitting, to the non-AP MLD, signaling comprising first timing information and receiving, from the non-AP MLD, a frame comprising at least one link identifier (ID) associated with at least one of the at least two wireless links, a power management (PM) mode indicator, and second timing information. Additionally, the method can include transmitting, to the non-AP MLD, an acknowledgement (ACK) frame and determining, based at least in part on the at least one link ID and the PM mode indicator, that one or more non-AP STAs of the non-AP MLD are transitioned to a power saving (PS) mode at a time associated with the second timing information.

In some embodiments, the method can include providing, via cross link signaling, the at least one link ID and PM mode indicator to one or more wireless links of the at least two wireless links. Additionally, the method can include refraining from communicating with the one or more non-AP STAs while the one or more non-AP STAs are in the PS mode. According to some embodiments, the at least two wireless links can be simultaneous transmission and reception (STR) links. In other embodiments, one or more of the at least two wireless links can be enhanced multi-link single radio (EMLSR) links or single link enhanced multi-link single radio (SL-EMI,SR) links. Additionally, the the first timing information can include cross link information exchange timing between at least any two APs of the AP. Furthermore, the cross link information exchange timing can be received during one of an association procedure, a beaconing procedure, or an enhanced multi-link (EML) operating mode notification (OMN) request and response mechanism, according to some embodiments.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system, according to some embodiments.
Figure 2 illustrates an example simplified block diagram of a wireless device, according to some embodiments.
Figure 3 illustrates an example WLAN communication system, according to some embodiments.
Figure 4 illustrates an example simplified block diagram of a WLAN Access Point (AP), according to some embodiments.
Figure 5 illustrates an example simplified block diagram of a wireless station (STA), according to some embodiments.
Figure 6 illustrates an example simplified block diagram of a wireless node, according to some embodiments.
Figures 7-8 illustrates examples of MLDs, according to some embodiments.
Figures 9A-C illustrate example aspects of legacy methods for power management (PM) of MLDs, according to some embodiments.
Figure 10 is a communication flow diagram illustrating an example enhanced method of power management techniques for a non-AP MLD, according to some embodiments.
Figure 11 is a communication flow diagram illustrating an example enhanced method of power management techniques for an AP MLD, according to some embodiments.
Figure 12 illustrates an example format for enhanced scheduled multi-link PM mode indication signaling, according to some embodiments.
Figures 13A-C enhanced methods for MLD PM mode changes for simultaneous transmission and reception (STR) and enhanced multi-link single radio (EMLSR) link scenarios, according to some embodiments.
Figures 14A-D illustrate signaling options and aspects for enhanced methods of PM for MLDs, according to some embodiments.
Figure 15 illustrates an example scenario involving PM between an AP MLD and a non-AP MLD in which the AP MLD has a "leaky" AP issue, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present application. Definitions of the most prominently used acronyms that can appear throughout the present application are provided below:
**UE:** User Equipment
**AP:** Access Point
**STA:** Wireless Station
**TX:** Transmission/Transmit
**RX:** Reception/Receive
**DL:** Downlink
**UL:** Uplink
**ML:** Multi-Link
**MLD:** Multi-Link Device
**LAN:** Local Area Network
**WLAN:** Wireless LAN
**RAT:** Radio Access Technology
**ACK:** Acknowledgment
**OTA:** Over the Air
**SU:** Single-User
**MU:** Multi-User
**MAC:** Media Access Control
**CPE:** Client Privacy Enhanced
**BSS:** Basic Service Set
**OBSS:** Overlapping Basic Service Set
**SN:** Sequence Number
**PN:** Packet Number
**TID:** Transaction Identifier
**AID:** Association Identifier
**SSID:** Service Set Identifier
**SAP:** Service Access Point
**EDCA:** Enhanced Distributed Channel Access
**TXOP:** Transmission Opportunity
**P2P:** Peer-to-Peer
**PM:** Power Management
**PMI:** Power Management Indication
**PS:** Power Saving
**QoS:** Quality of Service
**QN:** QoS Null
**ID:** Identifier
**EML:** Enhanced Multi-Link
**OMN:** Operating Mode Notification
**STR:** Simultaneous Transmission and Reception
**EMLSR:** Enhanced Multi-Link Single Radio
**TSF:** Timing Synchronization Function
**L1:** Link 1
**L2:** Link 2
**L3:** Link 3
**MAC:** Media Access Control
**MPDU:** MAC Protocol Data Unit
**CR:** Control Response

### Terminology

The following is a glossary of terms used in this disclosure:
**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium can include other types of non-transitory memory as well or combinations thereof. In addition, the memory medium can be located in a first computer system in which the programs are executed, or can be located in a second different computer system which connects to the first computer system over a network, such as the Internet. In the latter instance, the second computer system can provide program instructions to the first computer for execution. The term "memory medium" can include two or more memory mediums which can reside in different locations, e.g., in different computer systems that are connected over a network. The memory medium can store program instructions (e.g., embodied as computer programs) that can be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.
**Mobile Device (and/or Mobile Station)** - any of various types of computer systems devices which are mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which is easily transported by a user and capable of wireless communication using WLAN or Wi-Fi.
**Wireless Device (and/or Wireless Station)** - any of various types of computer systems devices which performs wireless communications using WLAN communications. As used herein, the term "wireless device" can refer to a mobile device, as defined above, or to a stationary device, such as a stationary wireless client or a wireless base station. For example, a wireless device can be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.
**WLAN** - The term "WLAN" has the full breadth of its ordinary meaning, and at least includes a wireless communication network or RAT that is serviced by WLAN access points and which provides connectivity through these access points to the Internet. Most modern WLANs are based on IEEE 802.11 standards and are marketed under the name "Wi-Fi". A WLAN network is different from a cellular network.
**Processing Element** - refers to various implementations of digital circuitry that perform a function in a computer system. Additionally, processing element can refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.
**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure can be initiated by input provided by the user, but the subsequent actions that are performed "automatically" are not specified by the user, e.g., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form can be automatically filled out by the computer system where the computer system (e.g., software executing on the computer system) analyzes the fields of the form and fills in the form without any user input specifying the answers to the fields. As indicated above, the user can invoke the automatic filling of the form, but is not involved in the actual filling of the form (e.g., the user is not manually specifying answers to fields but rather they are being automatically completed). The present specification provides various examples of operations being automatically performed in response to actions the user has taken.
**Concurrent** - refers to parallel execution or performance, where tasks, processes, signaling, messaging, or programs are performed in an at least partially overlapping manner. For example, concurrency can be implemented using "strong" or strict parallelism, where tasks are performed (at least partially) in parallel on respective computational elements, or using "weak parallelism", where the tasks are performed in an interleaved manner, e.g., by time multiplexing of execution threads.
**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

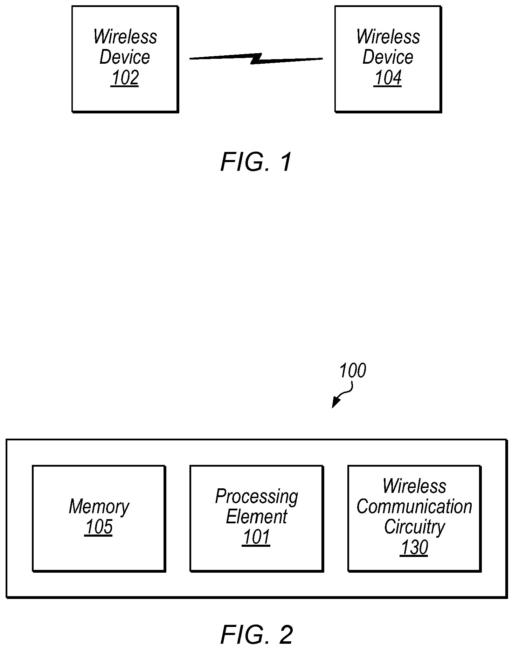

### Figures 1-2 - Wireless Communication System

Figure 1 illustrates an exemplary (and simplified) wireless communication system in which aspects of this disclosure can be implemented. It is noted that the system of Figure 1 is merely one example of a possible system, and embodiments of this disclosure can be implemented in any of various systems, as desired.

As shown, the exemplary wireless communication system includes a ("first") wireless device 102 in communication with another ("second") wireless device. The first wireless device 102 and the second wireless device 104 can communicate wirelessly using any of a variety of wireless communication techniques, potentially including ranging wireless communication techniques.

As one possibility, the first wireless device 102 and the second wireless device 104 can perform ranging using wireless local area networking (WLAN) communication technology (e.g., IEEE 802.11 / Wi-Fi based communication) and/or techniques based on WLAN wireless communication. One or both of the wireless device 102 and the wireless device 104 can also be capable of communicating via one or more additional wireless communication protocols, such as any of Bluetooth (BT), Bluetooth Low Energy (BLE), near field communication (NFC), LTE, LTE-Advanced (LTE-A), NR, ultra-wideband (UWB), etc.

The wireless devices 102 and 104 can be any of a variety of types of wireless device. As one possibility, one or more of the wireless devices 102 and/or 104 can be a substantially portable wireless user equipment (UE) device, such as a smart phone, hand-held device, a wearable device such as a smart watch, a tablet, a motor vehicle, or virtually any type of wireless device. As another possibility, one or more of the wireless devices 102 and/or 104 can be a substantially stationary device, such as a set top box, media player (e.g., an audio or audiovisual device), gaming console, desktop computer, appliance, door, access point, base station, or any of a variety of other types of devices.

Each of the wireless devices 102 and 104 can include wireless communication circuitry configured to facilitate the performance of wireless communication, which can include various digital and/or analog radio frequency (RF) components, a processor that is configured to execute program instructions stored in memory, a programmable hardware element such as a field-programmable gate array (FPGA), and/or any of various other components. The wireless device 102 and/or the wireless device 104 can perform any of the method embodiments described herein, or any portion of any of the method embodiments described herein, using any or all of such components.

Each of the wireless devices 102 and 104 can include one or more antennas for communicating using one or more wireless communication protocols. In some cases, one or more parts of a receive and/or transmit chain can be shared between multiple wireless communication standards; for example, a device might be configured to communicate using either of Bluetooth or Wi-Fi using partially or entirely shared wireless communication circuitry (e.g., using a shared radio or at least shared radio components). The shared communication circuitry can include a single antenna, or can include multiple antennas (e.g., for MIMO) for performing wireless communications. Alternatively, a device can include separate transmit and/or receive chains (e.g., including separate antennas and other radio components) for each wireless communication protocol with which it is configured to communicate. As a further possibility, a device can include one or more radios or radio components which are shared between multiple wireless communication protocols, and one or more radios or radio components which are used exclusively by a single wireless communication protocol. For example, a device might include a shared radio for communicating using one or more of LTE and/or 5G NR, and separate radios for communicating using each of Wi-Fi, UWB, and Bluetooth. Other configurations are also possible.

As previously noted, aspects of this disclosure can be implemented in conjunction with the wireless communication system of Figure 1. For example, a wireless device (e.g., either of wireless devices 102 or 104) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

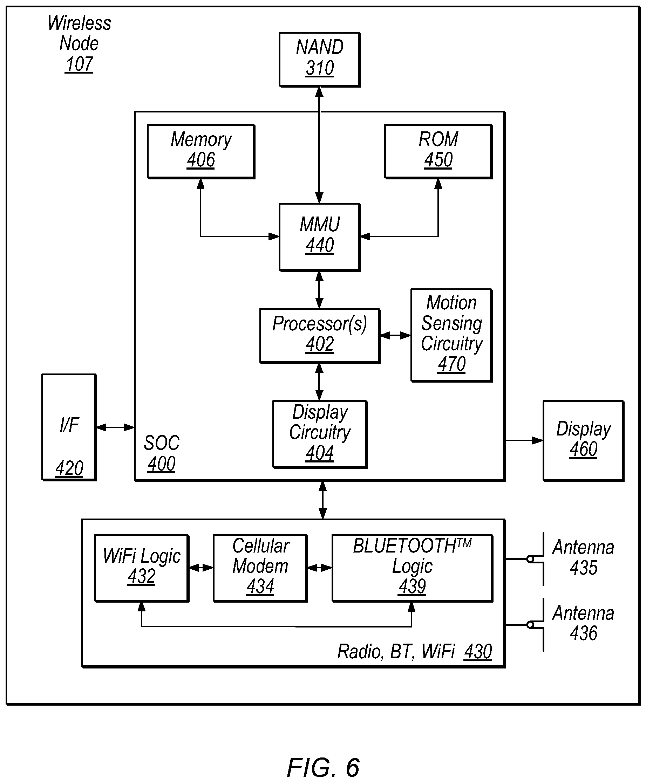

Figure 6 illustrates an exemplary wireless device 100 (e.g., corresponding to wireless devices 102 and/or 104) that can be configured for use in conjunction with various aspects of the present disclosure. The device 100 can be any of a variety of types of devices and can be configured to perform any of a variety of types of functionality. The device 100 can be a substantially portable device or can be a substantially stationary device, potentially including any of a variety of types of devices. The device 100 can be configured to perform one or more ranging wireless communication techniques or features, such as any of the techniques or features illustrated and/or described subsequently herein with respect to any or all of the Figures.

As shown, the device 100 can include a processing element 101. The processing element can include or be coupled to one or more memory elements. For example, the device 100 can include one or more memory media (e.g., memory 105), which can include any of a variety of types of memory and can serve any of a variety of functions. For example, memory 105 could be RAM serving as a system memory for processing element 101. Other types and functions are also possible.

Additionally, the device 100 can include wireless communication circuitry 130. The wireless communication circuitry can include any of a variety of communication elements (e.g., antenna(s) for wireless communication, analog and/or digital communication circuitry/controllers, etc.) and can enable the device to wirelessly communicate using one or more wireless communication protocols.

Note that in some cases, the wireless communication circuitry 130 can include its own processing element (e.g., a baseband processor), e.g., in addition to the processing element 101. For example, the processing element 101 can be an `application processor' whose primary function can be to support application layer operations in the device 100, while the wireless communication circuitry 130 can be a `baseband processor' whose primary function can be to support baseband layer operations (e.g., to facilitate wireless communication between the device 100 and other devices) in the device 100. In other words, in some cases the device 100 can include multiple processing elements (e.g., can be a multi-processor device). Other configurations (e.g., instead of or in addition to an application processor / baseband processor configuration) utilizing a multi-processor architecture are also possible.

The device 100 can additionally include any of a variety of other components (not shown) for implementing device functionality, depending on the intended functionality of the device 100, which can include further processing and/or memory elements (e.g., audio processing circuitry), one or more power supply elements (which can rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, can be operatively coupled via one or more interconnection interfaces, which can include any of a variety of types of interfaces, possibly including a combination of multiple types of interface. As one example, a USB high-speed inter-chip (HSIC) interface can be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces can be used for communications between various device components. Other types of interfaces (e.g., intra-chip interfaces for communication within processing element 101, peripheral interfaces for communication with peripheral components within or external to device 100, etc.) can also be provided as part of device 100.

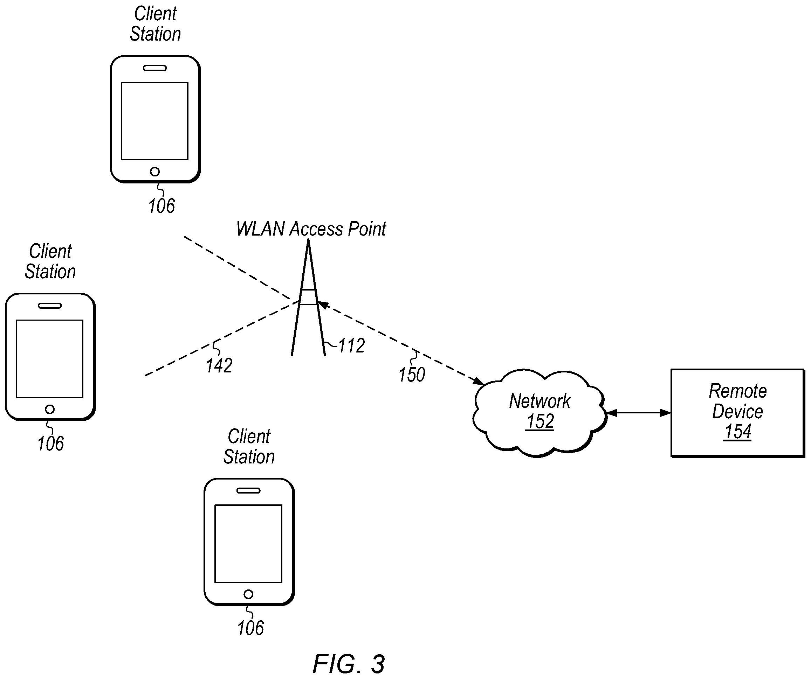

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that are configured to communicate over a wireless communication channel 142 with an Access Point (AP) 112. The AP 112 can be a Wi-Fi access point. The AP 112 can communicate via a wired and/or a wireless communication channel 150 with one or more other electronic devices (not shown) and/or another network 152, such as the Internet. Additional electronic devices, such as the remote device 154, can communicate with components of the WLAN system via the network 152. For example, the remote device 154 can be another wireless client station, a server associated with an application executing on one of the STAs 106, etc. The WLAN system can be configured to operate according to any of various communications standards, such as the various IEEE 802.11 standards. In some embodiments, at least one wireless device 106 is configured to communicate directly with one or more neighboring mobile devices, without use of the access point 112.

Further, in some embodiments, a wireless device 106 (which can be an exemplary implementation of device 100) can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

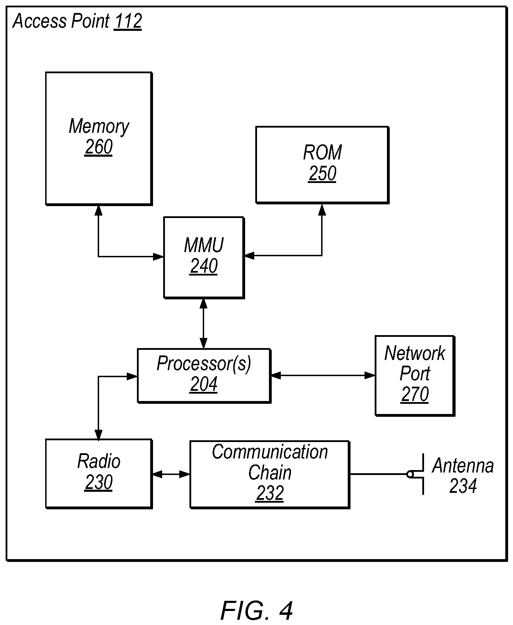

### Figure 4 - Access Point Block Diagram

Figure 4 illustrates an exemplary block diagram of an access point (AP) 112, which can be one possible exemplary implementation of the device 100 illustrated in Figure 4. It is noted that the block diagram of the AP of Figure 4 is only one example of a possible system. As shown, the AP 112 can include processor(s) 204 which can execute program instructions for the AP 112. The processor(s) 204 can also be coupled (directly or indirectly) to memory management unit (MMU) 240, which can be configured to receive addresses from the processor(s) 204 and to translate those addresses to locations in memory (e.g., memory 260 and read only memory (ROM) 250) or to other circuits or devices.

The AP 112 can include at least one network port 270. The network port 270 can be configured to couple to a wired network and provide a plurality of devices, such as mobile devices 106, access to the Internet. For example, the network port 270 (and/or an additional network port) can be configured to couple to a local network, such as a home network or an enterprise network. For example, port 270 can be an Ethernet port. The local network can provide connectivity to additional networks, such as the Internet.

The AP 112 can include at least one antenna 234, which can be configured to operate as a wireless transceiver and can be further configured to communicate with mobile device 106 via wireless communication circuitry 230. The antenna 234 communicates with the wireless communication circuitry 230 via communication chain 232. Communication chain 232 can include one or more receive chains, one or more transmit chains or both. The wireless communication circuitry 230 can be configured to communicate via Wi-Fi or WLAN, e.g., 802.11. The wireless communication circuitry 230 can also, or alternatively, be configured to communicate via various other wireless communication technologies, including, but not limited to, Long-Term Evolution (LTE), LTE Advanced (LTE-A), 5GNR, etc., for example when the AP is co-located with a base station in case of a small cell, or in other instances when it can be desirable for the AP 112 to communicate via various different wireless communication technologies.

Further, in some embodiments, as further described below, AP 112 can be configured to perform methods for robust discovery of a new access point (AP) in AP MLD, robust link addition to an AP MLD association, AP beaconing modes when the AP is added or deleted to/from an AP MLD, and robust BSS transition management (BTM) signaling to steer a non-AP MLD to a best AP MLD and to most suitable APs, as well as privacy improvements for associated non-AP MLD.

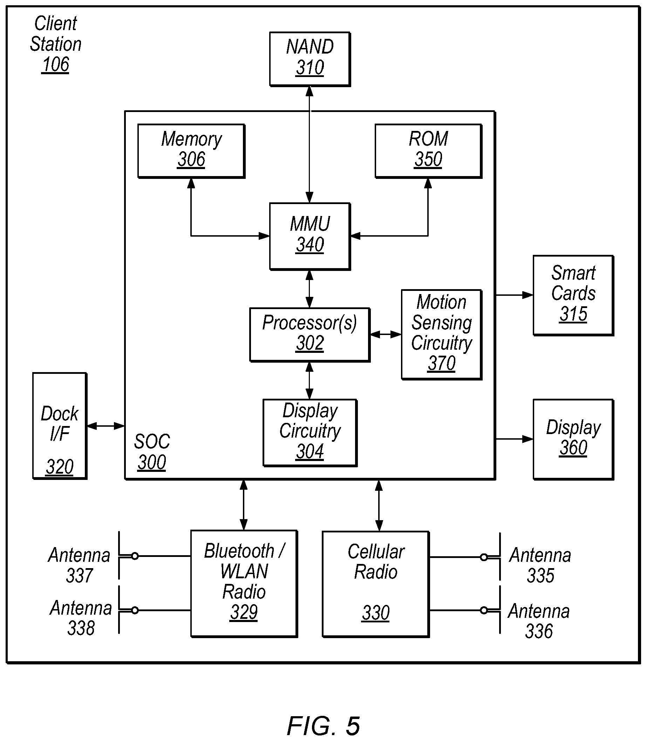

### Figure 5 - Client Station Block Diagram

Figure 5 illustrates an example simplified block diagram of a client station 106, which can be one possible exemplary implementation of the device 100 illustrated in Figure 4. According to embodiments, client station 106 can be a user equipment (UE) device, a mobile device or mobile station, and/or a wireless device or wireless station. As shown, the client station 106 can include a system on chip (SOC) 300, which can include portions for various purposes. The SOC 300 can be coupled to various other circuits of the client station 106. For example, the client station 106 can include various types of memory (e.g., including NAND flash memory 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, etc., and short to medium range wireless communication circuitry (e.g., Bluetooth^{™}/WLAN radio) 329 (e.g., Bluetooth^{™} and WLAN circuitry). The client station 106 can further include one or more smart cards 315 that incorporate SIM (Subscriber Identity Module) functionality, such as one or more UICC(s) (Universal Integrated Circuit Card(s)). The cellular communication circuitry 330 can couple to one or more antennas, such as antennas 335 and 336 as shown. The short to medium range wireless communication circuitry 329 can also couple to one or more antennas, such as antennas 337 and 338 as shown. Alternatively, the short to medium range wireless communication circuitry 329 can couple to the antennas 335 and 336 in addition to, or instead of, coupling to the antennas 337 and 338. The short to medium range wireless communication circuitry 329 can include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 can be used for ranging communications, e.g., using WLAN, Bluetooth, and/or cellular communications.

As shown, the SOC 300 can include processor(s) 302, which can execute program instructions for the client station 106 and display circuitry 304, which can perform graphics processing and provide display signals to the display 360. The SOC 300 can also include motion sensing circuitry 370 which can detect motion of the client station 106, for example using a gyroscope, accelerometer, and/or any of various other motion sensing components. The processor(s) 302 can also be coupled to memory management unit (MMU) 340, which can be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 can be configured to perform memory protection and page table translation or set up. In some embodiments, the MMU 340 can be included as a portion of the processor(s) 302.

As noted above, the client station 106 can be configured to communicate wirelessly directly with one or more neighboring client stations. The client station 106 can be configured to communicate according to a WLAN RAT for communication in a WLAN network, such as that shown in Figure 3 or for ranging as shown in Figure 1.

As described herein, the client station 106 can include hardware and software components for implementing the features described herein. For example, the processor 302 of the client station 106 can be configured to implement part or all of the features described herein, e.g., by executing program instructions stored on a memory medium (e.g., a non-transitory computer-readable memory medium). Alternatively (and/or in addition), processor 302 can be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320, 329, 330, 335, 336, 337, 338, 340, 350, 360, 370 can be configured to implement part or all of the features described herein.

In addition, as described herein, processor 302 can include one or more processing elements. Thus, processor 302 can include one or more integrated circuits (ICs) that are configured to perform the functions of processor 302. In addition, each integrated circuit can include circuitry (e.g., first circuitry, second circuitry, etc.) configured to perform the functions of processor(s) 204.

Further, as described herein, cellular communication circuitry 330 and short-range wireless communication circuitry 329 can each include one or more processing elements. In other words, one or more processing elements can be included in cellular communication circuitry 330 and also in short range wireless communication circuitry 329. Thus, each of cellular communication circuitry 330 and short-range wireless communication circuitry 329 can include one or more integrated circuits (ICs) that are configured to perform the functions of cellular communication circuitry 330 and short-range wireless communication circuitry 329, respectively. In addition, each integrated circuit can include circuitry (e.g., first circuitry, second circuitry, etc.) configured to perform the functions of cellular communication circuitry 330 and short-range wireless communication circuitry 329.

### Figure 6 - Wireless Node Block Diagram

Figure 6 illustrates one possible block diagram of a wireless node 107, which can be one possible exemplary implementation of the device 100 illustrated in Figure 6. As shown, the wireless node 107 can include a system on chip (SOC) 400, which can include portions for various purposes. For example, as shown, the SOC 400 can include processor(s) 402 which can execute program instructions for the wireless node 107, and display circuitry 404 which can perform graphics processing and provide display signals to the display 460. The SOC 400 can also include motion sensing circuitry 470 which can detect motion of the wireless node 107, for example using a gyroscope, accelerometer, and/or any of various other motion sensing components. The processor(s) 402 can also be coupled to memory management unit (MMU) 440, which can be configured to receive addresses from the processor(s) 402 and translate those addresses to locations in memory (e.g., memory 406, read only memory (ROM) 450, flash memory 410). The MMU 440 can be configured to perform memory protection and page table translation or set up. In some embodiments, the MMU 440 can be included as a portion of the processor(s) 402.

As shown, the SOC 400 can be coupled to various other circuits of the wireless node 107. For example, the wireless node 107 can include various types of memory (e.g., including NAND flash memory 310), a connector interface 420 (e.g., for coupling to a computer system, dock, charging station, etc.), the display 460, and wireless communication circuitry 430 (e.g., for 5GNR, LTE, LTE-A, Bluetooth, Wi-Fi, NFC, etc.).

The wireless node 107 can include at least one antenna, and in some embodiments, multiple antennas 435 and 436, for performing wireless communication with base stations and/or other devices. For example, the wireless node 107 can use antennas 435 and 436 to perform the wireless communication. As noted above, the wireless node 107 can in some embodiments be configured to communicate wirelessly using a plurality of wireless communication standards or radio access technologies (RATs).

The wireless communication circuitry 430 can include Wi-Fi Logic 432, a Cellular Modem 434, and Bluetooth Logic 439. The Wi-Fi Logic 432 is for enabling the wireless node 107 to perform Wi-Fi communications, e.g., on an 802.11 network. The Bluetooth Logic 439 is for enabling the wireless node 107 to perform Bluetooth communications. The cellular modem 434 can be capable of performing cellular communication according to one or more cellular communication technologies. Some or all components of the wireless communication circuitry 430 can be used for ranging communications, e.g., using WLAN, Bluetooth, and/or cellular communications.

As described herein, wireless node 107 can include hardware and software components for implementing embodiments of this disclosure. For example, one or more components of the wireless communication circuitry 430 (e.g., Wi-Fi Logic 432) of the wireless node 107 can be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

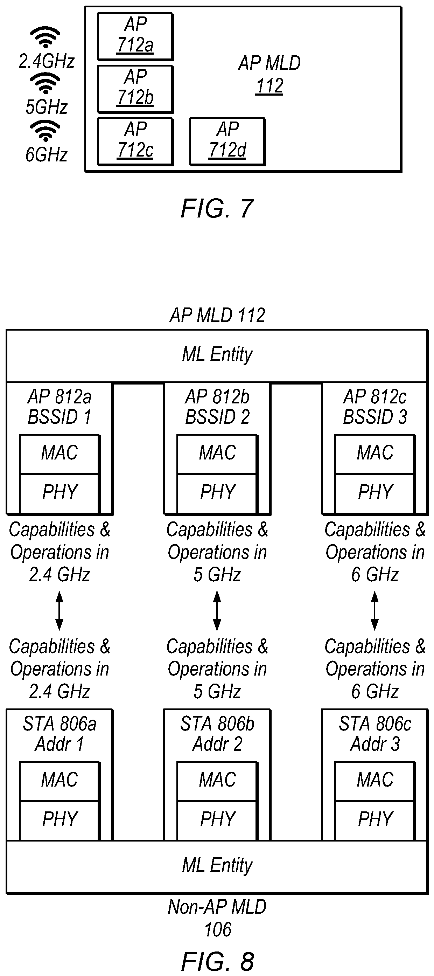

### Figures 7-8 - Multi-Link Device (MLD) operation

One or more IEEE 802.11 releases, such as IEEE 802.11bi, can include Multi-link Device (MLD) capabilities. In current implementations, an access point (AP) Multi Link Device (MLD) node can manage its affiliated APs. Thus, an AP MLD node can modify, add, and/or subtract affiliated APs to increase capacity, manage Basic Service Sets (BSSs) interference and coverage, including switching APs to operate in channels with less interference, and/or steer associated non-AP MLD nodes to operate on better performing APs and/or AP MLD nodes.

Figure 7 illustrates an AP MLD 112, according to some embodiments. The AP MLD can operate any number of affiliated APs, e.g., APs 712a, 712b, 712c, and 712d in the illustrated example. The affiliated APs can operate on any of various frequency bands. Affiliated APs can operate on different frequency ranges (e.g., channels) of the same band, or on different frequency bands.

The AP MLD can provide the affiliated APs from a single physical device, e.g., a single shared housing and potentially using the same antenna(s). In some embodiments, the AP MLD can provide the APs from multiple distinct devices (e.g., a first device can provide one or more APs, a second device can provide a different one or more APs, etc.). In some embodiments, various affiliated APs can be separated spatially (e.g., using beams in different directions, using different antennas with a shared housing (e.g., antennas of a same physical device), and/or of different devices, etc.).

In some embodiments, spatially separated affiliated APs can operate on a same (or overlapping) channel(s).

Figure 8 illustrates an AP MLD 112 in communication with a non-AP MLD 106, according to some embodiments.

As shown, the AP MLD 112 can operate three affiliated APs. In the illustrated example, AP 812a can operate in a 2.4 GHz band, AP 812b can operate in a 5 GHz band, and AP 812c can operate in a 6 GHz band. It will be appreciated that any number of affiliated APs can be used in any combination of bands. For example, the AP MLD can operate multiple affiliated APs in one band and/or possibly not operate any affiliated APs in a band. The affiliated APs can include various layers, e.g., media access control (MAC) and/or physical (PHY) layers, among various possibilities. The affiliated APs can use different basic service sets (BSS) and/or different BSS identifiers (BSSID), e.g., BSSIDs 1-3.

As shown, the non-AP MLD 106 can operate three affiliated STAs, e.g., corresponding to the three affiliated APs. In the illustrated example, STA 806a can operate in the 2.4 GHz band, STA 806b can operate in a 5 GHz band, and STA 806c can operate in a 6 GHz band. The STAs can communicate with the corresponding APs. It will be appreciated that any number of affiliated STAs can be used in any combination of bands. For example, the non-AP MLD can operate multiple affiliated STAs in one band and/or possibly not operate any affiliated STAs in a band. The non-AP MLD can operate STAs corresponding to some, none, or all of the APs of the AP MLD. The affiliated STAs can include various layers, e.g., PHY and/or MAC layers, among various possibilities. The affiliated STAs can use different addresses, e.g., Addr 1-3.

The non-AP MLD can provide the affiliated STAs from a single physical device, e.g., a single shared housing and potentially using the same antenna(s). In some embodiments, the non-AP MLD can provide the STAs from multiple distinct devices (e.g., a first device can provide one or more STAs, a second device can provide a different one or more STAs, etc.). In some embodiments, various affiliated STAs can be separated spatially (e.g., using beams in different directions, using different antennas with a shared housing (e.g., antennas of a same physical device), and/or of different devices, etc.).

The various affiliated STAs and APs can communicate concurrently / simultaneously. For example, STA 806a can exchange uplink and/or downlink data with AP 812a on a first link while STA 806b exchanges uplink and/or downlink data with AP 812b on a second link, etc. It will be appreciated that such concurrent communication can include (e.g., different) data being exchanged at the same time, overlapping times, and/or different times on different links. For example, data between the AP MLD and non-AP MLD can be routed over the first available link and/or a link selected based on other criteria (e.g., lowest energy use, etc.). For example, a first packet or portion of data can be sent over a first link and concurrently a second packet or portion of data can be sent over a second link.

In some embodiments, the AP MLD and non-AP MLD can include respective ML entities. An ML entity can provide upper MAC functionality that control the separate APs and/or STAs and can control traffic delivery through available links, e.g. between the various APs and STAs. The respective MLDs (e.g., AP and non-AP) can have only one respective MAC SAP interface. The ML entity can manage this interface. The ML entity can manage transmission buffering (e.g., bookkeeping and link selection in the transmitter) and data re-order buffering in reception (e.g., combination of the data that is transmitted in different links).

The AP MLD 112 and non-AP MLD 106 can exchange information about their respective operations, operating parameters, and/or capabilities.

The non-AP MLD can have various capabilities for operating a STA in a particular band. The capabilities can be different for different bands. For example, the capabilities in a band can describe the maximum (e.g., fastest, most flexible, most powerful, highest throughput, etc.) parameter values that a STA of the non-AP MLD can use. Operations or operating parameters can describe the parameter values that are currently in use or planned to be in use at a future time.

For example, the parameters can include an applicable PHY version and its parameters. The parameters can describe supported services and transmission formats that are available. The parameters can also describe available resources, bandwidths and number of spatial streams. The parameters can describe power save support parameters which can enable low power transmissions. For instance, an AP can support Target Wake Time (TWT) power save.

In some embodiments, the links can be located so closely (e.g., spatially and/or in frequency), that non-AP STA possibly not operate them independently (e.g., due to limits of the device and/or to manage resources or performance). APs can support STAs (e.g., non-AP MLDs) that are not capable of simultaneously transmitting and receiving on the link pair.

In some embodiments, the non-AP MLD can operate STAs communicating with multiple AP-MLDs. For example, a first STA can communicate with a first AP MLD and a second STA can communicate with a second AP MLD. Similarly, an AP MLD can communicate with multiple STAs. For example, one affiliated AP can communicate with multiple STAs.

In the illustrated example, the non-AP MLD operates a number of STAs equal to the number of APs provided by the AP MLD. However, different numbers are possible. For example, the AP MLD can provide more APs than the number of STAs operated by the non-AP MLD or vice versa. The number of APs and/or number of STAs can change over time.

According to some embodiments, it can be beneficial for client privacy enhanced (CPE) stations (STAs) or clients to change or adjust certain parameters used for performing communications with an AP. For example, eavesdroppers can seek to intercept, extract or listen in on communications between certain CPE STAs and APs. Accordingly, clients can seek to perform more secure communications between the CPE STAs and APs using various techniques involving address changing or related parameter adjustments.

For example, it can be beneficial for a CPE Client to change its own over-the-air (OTA) media access control (MAC) address used for communicating with an AP when reassociating from one CPE AP to another CPE AP. Additionally or alternatively, it can be beneficial for a CPE Client to initiate changing its own OTA MAC address used with a CPE AP in an associated state (e.g., STA State 4) without any loss of connection. In some embodiments, it can be beneficial for a CPE Client to initiate changing the OTA MAC addresses of all associated CPE Client's in the base station system (BSS) (e.g., those CPE Clients in associated STA State 4) simultaneously without any loss of connection. Furthermore, it can be beneficial for a CPE client and CPE AP to change the transmitted sequence number (SN), packet number (PN) and transaction identifier (TID) to an uncorrelated new value on downlink and uplink to new values in an associated STA State 4, without any loss of connection, according to some embodiments. Moreover, it can be further beneficial for a CPE Client and CPE AP to change the CPE Client's association identifier (AID) to an uncorrelated new value in an associated STA State 4, without any loss of connection.

### Power Management for Multi-Link Operation

In recent Wi-Fi releases, changes of power management (PM) modes have been performed on a per-link basis due to cross link PM mode changes not being supported. For example, when a non-AP MLD wanted to enter a power saving (PS) mode on all of the links, the non-AP MLD and AP MLD were required to perform separate frame exchanges (to change the PM mode) over each of the enabled links. However, this per-link frame exchange (e.g., separate frame exchanges) to change the PM mode is inefficient and could potentially cause long delays for STAs of non-AP MLD to enter a PS mode in which they can enter a sleep (e.g., doze) state.

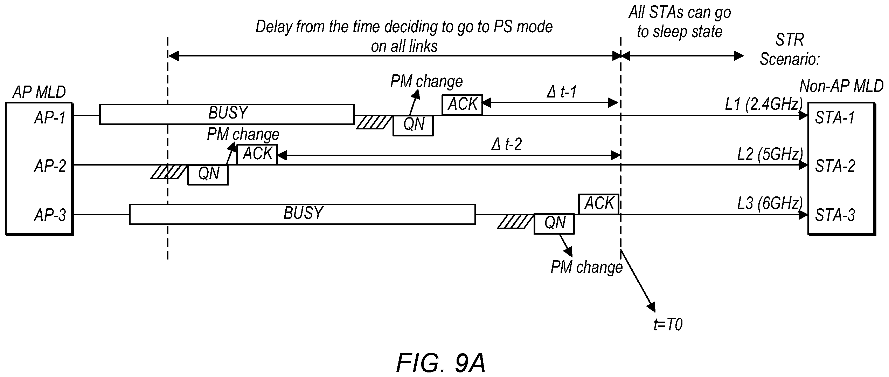

### Figures 9A-C - Legacy Methods for MLD PM Mode Changes for STR and EMI,SR Link Scenarios

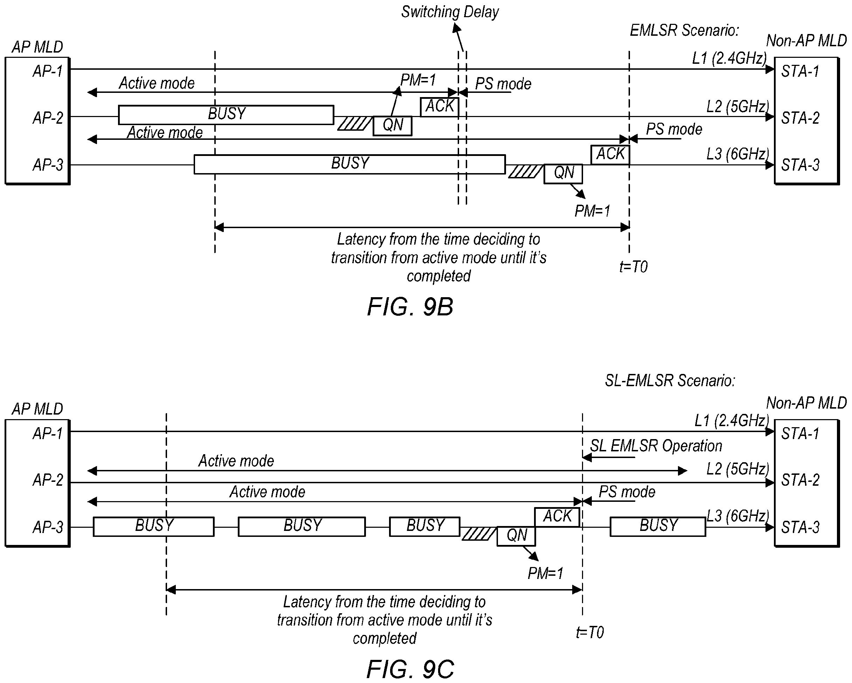

Figures 9A-C illustrate legacy methods for PM mode changes for MLDs, according to some embodiments. For example, the method of Figure 9A can be applicable to a first example scenario involving three simultaneous transmission and reception (STR) links and the switching delays experienced when changing PM modes, according to some embodiments. Furthermore, Figures 9B-C illustrate different scenarios involving EMI,SRs and the potential latency issues experienced when changing PM modes, according to some embodiments.

Figure 9A illustrates separate frame exchanges over each link to change the PM modes of all of the links (links L1, L2, and L3) between a non-AP MLD (including STA-1, STA-2, and STA-3) and an AP MLD (including AP-1, AP-2, and AP-3). For example, in order for the non-AP MLD to transition to or from a sleep state at time T0, the non-AP MLD needs (according to legacy methods) to send a PM indication (e.g., PM=1, corresponding to a PS mode or PM=0 corresponding to a change from a PS mode to an active mode) over each link at an earlier time. However, in some instances, this causes AP-1 and AP-2 to stop sending DL traffic earlier than is needed (e.g., during Δt-1 and Δt-2) and therefore prevents L1 and L2 from being used by the non-AP MLD and AP MLD during these periods. For example, STA-2 can transmit a QoS Null message (QN) which can include the PM change indication and subsequently receive an acknowledgement (ACK) from AP-2. Accordingly, the time between receiving the ACK and transitioning to (or from) a sleep state can be characterized by Δt-2, according to some embodiments.

Furthermore, when link-1 is no longer busy, STA-1 can also transmit a QN and receive an ACK from AP-1 and after time Δt-1 (e.g., at t=T0) has elapsed, STA-1 can also transition to or from a sleep state (e.g., during PS mode). Similarly at t=T0, after STA-3 is no longer busy and after STA-3 transmits a QN and receives an ACK from AP-3, STA-3 can also transition to a PS mode or from a PS mode (e.g., to an active mode). Accordingly, at time t=T0, all of the STAs can be assumed to be in power save and sleep state (or alternatively in an active state if PM=0 corresponding to a change from a PS mode to an active mode was received). Additionally and according to some embodiments, L1, L2, and L3 can all be STR links and respectively operate on 2.4GHz, 5GHz, and 6GHz frequency bands. In other words, Figure 9A illustrates a legacy method of how multiple STAs of non-AP MLDs can be transitioned to PS modes or from PS modes (e.g., to an active mode) via separate PM signaling over each link with the AP MLD.

Figure 9B illustrates a second example scenario involving PM mode changes in which L1 is a STR link and L2 and L3 are EMI,SR links, according to some embodiments. Similar to the first scenario, there can be extra latency (e.g., an EMI,SR switching delay) for frame exchange in UL over the EMI,SR links for PM indication due to EMI,SR limitations. For example, for a non-AP MLD to transition to PS mode or from a PS mode (e.g., to an active mode) on its EMI,SR links and remain awake on the STR link (L1, 2.4GHz link), it can be necessary (according to legacy methods) that STA-2 and STA-3 send the PM indication separately per link which can further require contention procedures per-link and switching between the EMI,SR links in order to change the PM, according to some embodiments.

Accordingly, Figure 9B illustrates separate frame exchanges over L2 and L3 to change the PM modes of these links (L2 and L3) between a non-AP MLD (including STA-1, STA-2, and STA-3) and an AP MLD (including AP-1, AP-2, and AP-3). For example, in order for STA-2 and STA-3 to go to a sleep state (e.g., in a PS mode), the non-AP MLD needs (according to legacy methods) to send a PM indication (e.g., PM=1, corresponding to the PS mode or PM=0 corresponding to a change from a PS mode to an active mode) over L2 and L3. For example, when STA-2 is no longer busy, it can transmit a QN which can include the PM change indication and subsequently receive an ACK from AP-2. Furthermore, there can be a switching delay between the time of receiving the ACK and STA-2 transitioning to a PS mode from an active mode, according to some embodiments.

Similarly, when STA-3 is no longer busy, STA-3 can also transmit a QN and receive an ACK from AP-3 and subsequently transition to a PS mode or from a PS mode (e.g., to an active mode). Accordingly, there can be a latency (e.g., time delay) from the time the non-AP MLD decided to transition STA-2 and STA-3 from their respective active modes to PS modes or from their respective PS modes (e.g., to active modes), according to some embodiments. In other words, in order for STA-2 and STA-3 to go to a sleep mode at t=T0 as shown in Figure 9B, the PS mode indication should be sent earlier such that no DL traffic is received from that time until t=T0.

Figure 9C illustrates a third example scenario involving PM mode changes in which L1 is a STR link and L2 and L3 are EMI,SR links, according to some embodiments. However, if L3 is very busy, it can be beneficial to operate L2 as a single-link EMI,SR (SL EMI,SR), according to some embodiments. For example, transitioning a SL EMI,SR to a power save mode instead of explicitly enabling/disabling an EMI,SR link (e.g., L3) via an enhanced multi-link (EML) operating mode notification (OMN) frame exchange can be a more efficient use of the non-AP MLDs resources and/or power. Accordingly, in order to transition STA-3 to a PS mode or from a PS mode (e.g., to an active mode), it can be necessary for the non-AP MLD to switch to the busy link (L3) and send a QN to change the PM mode (after receiving an ACK). Similar to Figure 9B, there can be a latency or time delay from the time the non-AP MLD decides to transition STA-3 from an active mode to a PS mode or from a PS mode (e.g., to an active mode), according to some embodiments. In summary, Figures 9A-C illustrate various aspects of the latency and inefficiency issues experienced in per-link (e.g., separate) PM signaling used in legacy methods.

Accordingly, some proposals for the latest Wi-Fi release (e.g., Wi-Fi 7) have been discussed. For instance, cross link PM mode changes for non-AP MLDs through use of an A-Control field can be possible so as to avoid having to perform separate frame exchanges, according to some embodiments. Additionally, one bit of the A-Control field can be used to indicate the PM mode and a 8-bit bitmap of the A-Control field can be used to indicate the link identifiers (IDs) to which the PM changes apply to.

These proposals consider the immediate cross link information delivery although there is a non-negligible cross link information exchange delays between the APs of AP MLD. For example, scheduled multi-link (ML) PM mode indication with timing information can be introduced to address the cross link information exchange delay between the APs of AP MLD, according to some embodiments. Additionally, when a non-AP MLD switches to a PS mode, it can be beneficial for the non-AP MLD to include the duration information of the STA remaining in the PS mode (or vice versa for switching to the active mode), according to some embodiments.

Accordingly, the methods described hereinbelow detail scenarios and enhanced techniques of multi-link PM mode changing which can allows for faster and more efficient PM mode changes across links. For example, the enhanced techniques include the AP MLD informing its expected cross link information exchange delay to associated non-AP MLDs such that the non-AP MLD can provide appropriately scheduled PM mode indications to assist the AP MLD in meeting the cross link information exchange delay.

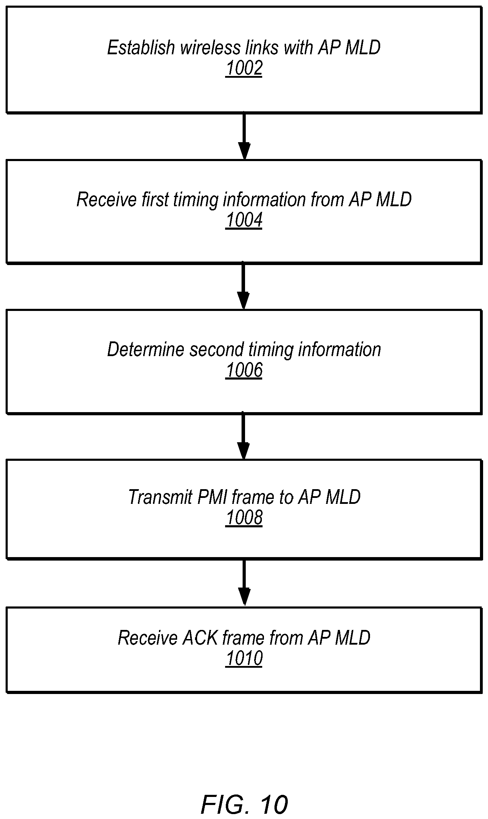

### Figures 10-11 - Enhanced Methods for Power Management for MLDs

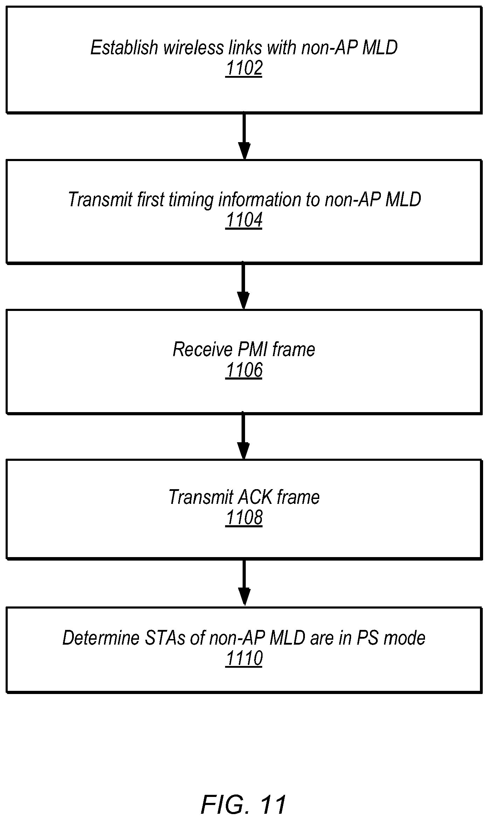

Figures 10 and 11 are communication flow diagrams illustrating enhanced methods of power management techniques for MLDs according to some embodiments. Such techniques can aid in providing more efficient methods (as compared to legacy methods) to reduce power consumption among AP MLD and non-AP MLDs.

For example, Figure 10 illustrates an example enhanced method of power management techniques performed by a non-AP MLD, according to some embodiments. Aspects of the method of Figure 10 can be implemented by a non-AP MLD in communication with an AP MLD. The AP MLD and/or non-AP MLD can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 10 are described in a manner relating to the use of communication techniques and/or features associated with IEEE and/or 802.11 (e.g., 802.11be) specification documents, such description is not intended to be limiting to the disclosure, and aspects of the method of Figure 10 can be used in any suitable wireless communication system, as desired. Similarly, while elements of the method of Figure 10 are described in a manner relating to non-APs that can be MLDs, such description is not intended to be limiting to the disclosure, and aspects of the method of Figure 10 can be used by non-APs that are not MLDs, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

At 1002, a non-AP MLD can establish wireless links with an AP MLD, according to some embodiments. For example, the non-AP MLD can establish, via an access channel, at least two wireless links with an AP MLD including a group of at least two APs. According to some embodiments, establishing the wireless links can include an association procedure. For example, the non-AP MLD can scan for target AP(s) (which can be included in a AP MLD) using active or passive scanning, according to some embodiments. Accordingly, the non-AP MLD can transmit a probe request to one or more target AP(s) as a way to scan available AP(s). In some embodiments, the target AP(s) can transmit a probe response to the non-AP MLD. Using this additional information, the non-AP MLD can then transmit an association request to the target AP. Additionally, the non-AP MLD can receive an association response from the target AP as part of the association and/or roaming procedure. According to some embodiments, the AP MLD can transmit expected cross link information exchange delay information to the non-AP MLD during an association procedure.

At 1004, the non-AP MLD can receive first timing information from the AP MLD, according to some embodiments. For example, the non-AP MLD can receive cross link information exchange timing information from the AP MLD. This cross link information exchange timing information can correspond to a time needed for the AP MLD to exchange signaling or provide instructions across its multiple APs. In some embodiments, the AP MLD's expected cross link information exchange delay can be sent to the non-AP MLD through a EML OMN request and response procedure.

At 1006, the non-AP MLD can determine second timing information, according to some embodiments. For example, the non-AP MLD can determine, based at least in part on the first timing information, second timing information for the at least two wireless links. In some embodiments, the second timing information can include a timing synchronization function (TSF). Additionally or alternatively, the second timing information can include or indicate a timing offset associated with a time at which the one or more non-AP STAs are transitioned to a PS mode or an active mode.

At 1008, the non-AP MLD can transmit a power management indication (PMI) frame to the AP MLD, according to some embodiments. For example, the non-AP MLD can transmit, to a first AP of the of the at least two APs, a frame including at least one link identifier (ID), at least one indication of a power management (PM) mode, and the timing offset information determined in 1006. In some embodiments, the second timing information can be characterized as a timing offset between transmitting the frame and the time at which the one or more non-AP STAs are transitioned to a PS mode or from a PS mode (e.g., to an active mode). Furthermore, the frame can further include duration information corresponding to a duration of time in which the one or more non-AP STAs are in the PS mode, according to some embodiments. Additionally, the frame can be a PMI frame and the indication of the PM mode can be a bit value equal to 1 to indicate the transition of the one or more non-AP stations to the PS mode or an active mode.

According to some embodiments, the frame can be transmitted using A-Control field signaling. In some embodiments, the A-Control field signaling can include at least one of an 8-bit Link-ID subfield, a 1-bit PM mode subfield, a 8-bit Timing Offset subfield, 8-bit Duration subfield, or a 1-bit Reserved subfield. According to some embodiments, the A-Control field signaling can be included in a media access control protocol data unit (MPDU), a control response (CR) frame, or a quality of service null (QN) frame.

At 1010, the non-AP MLD can receive an ACK frame from the AP MLD, according to some embodiments. For example, the non-AP MLD can receive, from the first AP of the AP MLD, an ACK frame. Additionally and subsequent to reception of the ACK frame and based on the at least one link ID (e.g., a link ID associated with at least one of the wireless links) and the indication of the PM mode (e.g., PM mode indicator), one or more non-AP stations (STAs) of a non-AP MLD are transitioned, at a time associated with the second timing information, to a power saving (PS) mode or from a PS mode (e.g., to an active mode).

Furthermore, Figure 11 illustrates an example method of enhanced power management techniques performed by an AP MLD, according to some embodiments. Aspects of the method of Figure 11 can be implemented by an AP MLD in communication with a non-AP MLD. The AP MLD and/or non-AP MLD can be as illustrated in and described with respect to various ones of the Figures herein, or more generally in conjunction with any of the computer circuitry, systems, devices, elements, or components shown in the above Figures, among others, as desired. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, non-AP, and/or AP, or other device to perform such method elements.

Note that while at least some elements of the method of Figure 11 are described in a manner relating to the use of communication techniques and/or features associated with IEEE and/or 802.11 (e.g., 802.11be) specification documents, such description is not intended to be limiting to the disclosure, and aspects of the method of Figure 11 can be used in any suitable wireless communication system, as desired. Similarly, while elements of the method of Figure 11 are described in a manner relating to APs that can be MLDs, such description is not intended to be limiting to the disclosure, and aspects of the method of Figure 11 can be used by APs that are not MLDs, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

At 1102, the AP MLD can establish wireless links with a non-AP MLD, according to some embodiments. In some instances, the AP MLD can establish, via an access channel, at least two wireless links with a non-access point (non-AP) multi-link device (MLD) comprising a group of at least two non-AP stations (STAs). According to some embodiments, establishing the wireless links can include an association procedure. For example, the non-AP MLD can scan for target AP(s) (which can be included in the AP MLD) using active or passive scanning, according to some embodiments. Accordingly, the non-AP MLD can transmit a probe request to one or more target AP(s) as a way to scan available AP(s). In some embodiments, the target AP(s) of the AP MLD can transmit a probe response to the non-AP MLD. Using this additional information, the non-AP MLD can then transmit an association request to the target AP of the AP MLD. Additionally, the non-AP MLD can receive an association response from the AP MLD as part of the association and/or roaming procedure. According to some embodiments, the AP MLD can transmit expected cross link information exchange delay information to the non-AP MLD during an association procedure.

At 1104, the AP MLD can transmit first timing information to the non-AP MLD, according to some embodiments. According to some embodiments, the AP MLD can transmit cross link information exchange timing information to non-AP MLD as part of the first timing information. This cross link information exchange timing information can correspond to a time needed for the AP MLD to exchange signaling or provide instructions across its multiple APs. In some embodiments, the AP MLD's expected cross link information exchange delay can be sent to the non-AP MLD through a EML OMN request and response procedure.

At 1106, the AP MLD can receive a frame from the non-AP MLD, according to some embodiments. In some instances, the AP MLD can receive, from the non-AP MLD, a frame comprising at least one link identifier (ID) of the at least two wireless links (e.g., a link ID associated with at least one of the wireless links), an indication of a power management (PM) mode, and second timing information. Additionally, the frame can be a power management indication (PMI) frame and the indication of the PM mode can be a bit value equal to 1 to indicate the transition of the one or more non-AP stations to the PS mode or from a PS mode (e.g., to an active mode). In some embodiments, the second timing information can include a timing synchronization function (TSF). According to some embodiments, the second timing information can be characterized as a timing offset between the AP MLD receiving the frame and the time at which the one or more non-AP STAs are transitioned to a PS mode or from a PS mode (e.g., to an active mode). Furthermore, the frame can further include duration information corresponding to a duration of time in which the one or more non-AP STAs are in the PS mode, according to some embodiments. Additionally or alternatively, the second timing information can include or indicate a timing offset associated with a time at which the one or more non-AP STAs are transitioned to a PS mode or from a PS mode (e.g., to an active mode).

According to some embodiments, the frame can be receiving via A-Control field signaling. In some embodiments, the A-Control field signaling can include at least one of an 8-bit Link-ID subfield, a 1-bit PM mode subfield, a 8-bit Timing Offset subfield, 8-bit Duration subfield, or a 1-bit Reserved subfield. According to some embodiments, the A-Control field signaling can be included in a media access control protocol data unit (MPDU), a control response (CR) frame, or a quality of service null (QN) frame.

At 1108, the AP MLD can transmit an ACK frame to the non-AP MLD, according to some embodiments. According to some embodiments, the ACK frame can be transmitted from the AP MLD to the non-AP MLD to confirm reception of the frame received in 1106.

At 1110, the AP MLD can determine that one or more STAs of the non-AP MLD are in a PS mode, according to some embodiments. In some instances, the AP MLD can determine, based on the at least one link ID and the indication of the PM mode, that one or more non-AP STAs of the at least two non-AP STAs have transitioned to a power saving (PS) mode or from a PS mode (e.g., to an active mode) at a time associated with the second timing information.

In some embodiments, the AP MLD can provide, via cross link signaling, the at least one link ID and the indication of the PM mode to one or more wireless links of the at least two wireless links. Additionally, the AP MLD can refrain from communicating with the one or more non-AP STAs while the one or more non-AP STAs are in the PS mode. According to some embodiments, the at least two wireless links can be simultaneous transmission and reception (STR) links. In other embodiments, one or more of the at least two wireless links can be enhanced multi-link single radio (EMLSR) links or single link enhanced multi-link single radio (SL-EMLSR) links.

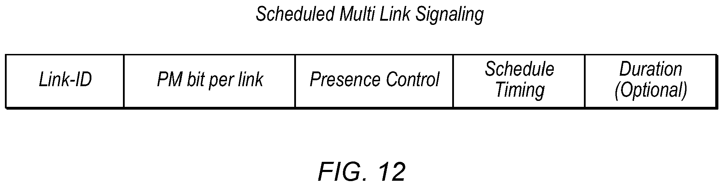

### Figure 12 - Scheduled Multi-Link PM Signaling

Figure 12 illustrates an example format for enhanced scheduled multi-link PM mode indication signaling, according to some embodiments. For example and related to the methods illustrated by Figures 10 and 11, scheduled multi-link PM mode indication signaling can enable the multi-link PM mode indication through a single frame exchange which can decrease the overhead and latency of PM mode changes, according to some embodiments.

Accordingly, multiple fields in the scheduled multi-link PM mode indication signaling can be used indicate parameters related to a scheduled PM mode change. For example and as illustrated in Figure 12, the fields in a scheduled multi-link PM mode indication signal can include assigned bits to indicate Link-ID(s), PM bit(s) per-link, Presence Control, Schedule Timing, and Duration (which can be an optional field), according to some embodiments. In some instances, the fields in scheduled multi-link PM mode indication signaling can include a PM indication for each link (as well as the associated Link ID(s) (e.g., associated with at least one of the wireless links)) in addition to Presence Control, Schedule Timing, and Duration fields. In some embodiments, the schedule timing field can correspond or indicate a time in the future in which the PM mode change should be applied. For example, the non-AP MLD can use the "Schedule Timing" field to provide the scheduled PM mode change indication to the AP MLD in the future. This schedule timing indication can be absolute timing (e.g. a timing synchronization function (TSF)) or a time offset, according to some embodiments. Furthermore, the multi-link PM signaling information can be carried in a Control frame or a version of the signaling in A-Control Field, according to some embodiments.

In some embodiments, the non-AP MLD can have previously received the AP MLD's expected cross link information exchange delay. For example, this cross link information exchange delay/timing information could have been sent to the non-AP MLD during the association, beaconing or through a EML OMN request and response mechanism or exchange. Accordingly, the non-AP MLD can use the cross link information exchange delay/timing information to set the "Schedule Timing" field to meet the cross link information exchange delay of the AP MLD, according to some embodiments. Additionally or alternatively, the non-AP MLD can use the duration field to indicate a duration for which the STA (associated with a Link ID) should remain in the PS mode (or active mode reciprocally). In other words and in order to reduce extra signaling overhead, the non-AP MLD can use the duration field of the scheduled multi-link PM mode indication signaling to indicate the time duration for a STA to remain in a PS mode before returning to an active mode. By including this optional field, this can reduce signaling overhead by not having to transmit additional frame with a PM=0 indication to instruct the STA to return to the active mode, according to some embodiments.

According to some embodiments, the scheduled multi-link PM mode indication signaling can be a power management indicator (PMI) frame. Furthermore, the PMI frame can be a new control frame that is sent as a standalone frame with enough exhaustive number of bits available so that a STA can access the channel and send it, according to some embodiments.

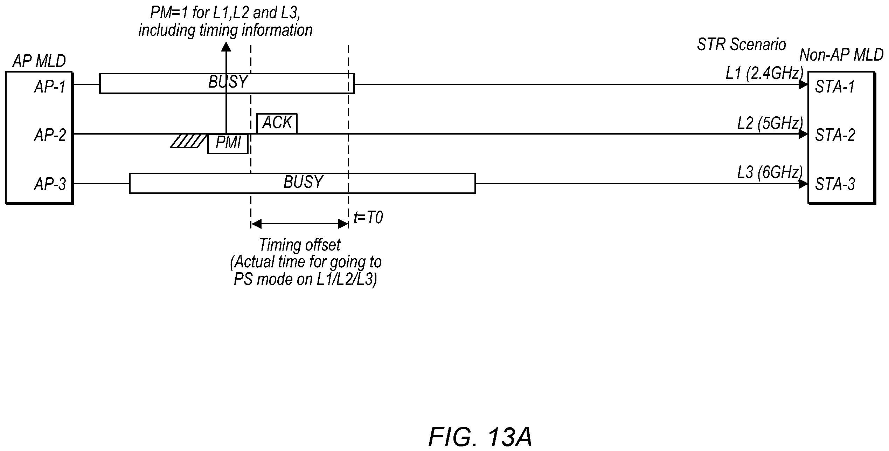

### Figures 13A-C - Enhanced Methods for ML PM Mode Changes for STR and EMI,SR Link Scenarios

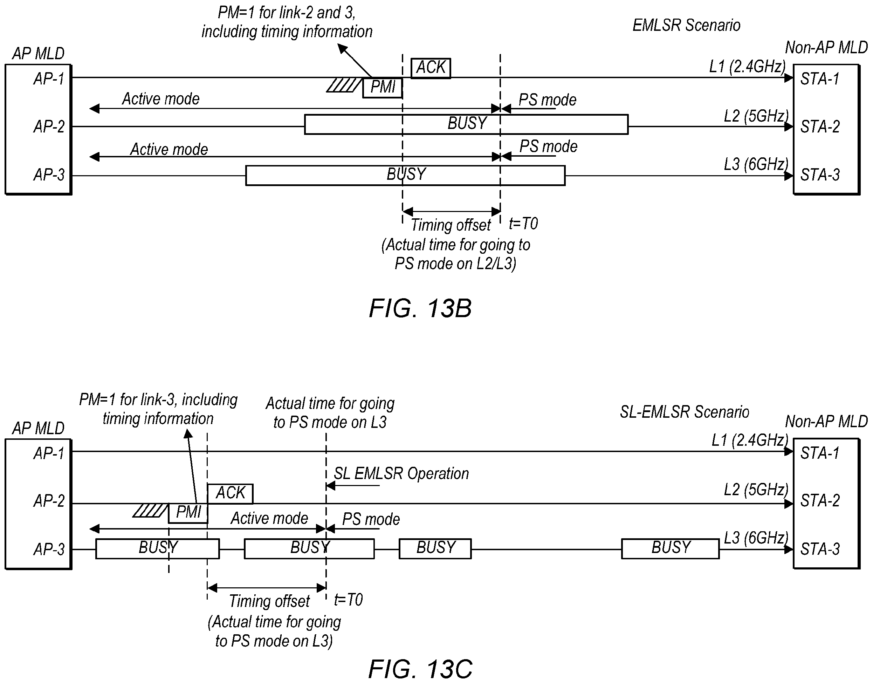

Figures 13A-C illustrate enhanced methods for ML PM mode changes for STR and EMI,SR link scenarios, according to some embodiments. For example, Figure 13A can correspond to a first example scenario involving three STR links and reduced switching delays when changing PM modes according to enhanced power management techniques, according to some embodiments. Furthermore, Figures 13B-C illustrate different scenarios involving EMI,SRs and the potential latency reductions possible when changing PM modes using enhanced power management techniques, according to some embodiments.

Figure 13A illustrates a single frame exchange over one link to change the PM modes for the STAs associated with all of the links (links L1, L2, and L3) between a non-AP MLD (including STA-1, STA-2, and STA-3) and an AP MLD (including AP-1, AP-2, and AP-3). In other words, rather than having to transmit separate QN messages (and receiving ACKs) for each link to transition them to PS modes or from PS modes (e.g., to active modes), Figure 13A illustrates an enhanced technique involving three STR links and reduced switching delays when changing PM modes. For example, in order for STA-1, STA-2, and STA-3 to go to a sleep state (e.g., PS mode) at time T0 (e.g., t=T0), the non-AP MLD can send a PM indication (PMI) frame over one link (e.g., L2) and that link can then use cross link PM signaling to provide the other links (L1, L3) with the appropriate information from the PMI frame. As discussed above with regard to Figure 12, the PMI frame can include fields to indicate Link-ID(s), PM bit(s) per-link, Presence Control, Schedule Timing, and Duration, according to some embodiments. For example, the PMI frame can include a field indicating PM=1 for L1, L2, and L3 such that all of the STAs associated with these links should transition from an active mode to a PS mode. Alternatively, a field indicating PM=0 for L1, L2, and L3 would indicate that all of the STAs associated with these links should transition from a PS mode to an active mode, according to some embodiments. Additionally, the PMI frame can include timing information related to the change of the PM modes of STA-1, STA-2, and STA-3.

For example, Figure 13A illustrates AP-2 receiving a PMI including PM=1 for L1, L2, and L3 in addition to timing information related to the change in PM modes. Accordingly, AP-2 can transmit an ACK to STA-2 to confirm that the PMI frame was received. Furthermore, the timing information can correspond to a timing offset associated with a time between the PMI being received and a time t=T0 at which all of the STAs should be considered to be in (e.g., characterized by being in) a PS mode and sleep state. In other words, the timing offset can correspond to a time period for STA-1, STA-2, and STA-3to transition to a PS mode or from a PS mode (e.g., to an active mode) after the AP MLD's reception of the PMI frame. Furthermore, AP-2 can utilize this time window (e.g., timing offset) to provide, via cross link signaling, PM mode change information (included in the PMI) to the other links (e.g., L1 and L3), according to some embodiments. Accordingly, once AP-1 and AP-3 receive the appropriate PMI information via the cross link signaling, all three STAs can be characterized at time t=T0 as being in a PS mode.

Furthermore, addressing the AP MLD architectures that are not considered MLD between 2.4GHz and 5GHz or 6GHz can be beneficial. For example, some AP MLDs do not consider a 2.4GHz link as part of a MLD architecture and therefore the cross link information exchange delay between 2.4GHz links and 5GHz or 6GHz AP links can be much longer. In order to accommodate such architectures, AP MLDs can indicate only the links which support the cross link signaling (e.g., not all the enabled links in some instances).

Moreover, a maximum cross link information exchange delay requirement can be utilized by a non-AP MLD, according to some embodiments. For example, if the cross link information exchange delay is very long, it is possible that the non-AP MLD cannot benefit from the scheduled multi-link PM indication and instead it must contend over each link separately to indicate the PM mode changes. Accordingly, if a cross link information exchange delay requirement was defined as being less thana maximum physical protocol data unit (PPDU) duration (e.g., 5.4ms), this could be useful for the non-AP MLD so that it has a sufficient amount of time to perform the PM mode changes across the appropriate links, according to some embodiments.

Additionally, STAs of the non-AP MLD can use the PM bit in the Frame Control field for the same link along with the multi-link PM, according to some embodiments. For example and similar to the legacy methods described in Figures 9A-C, STAs of the non-AP MLD can implement the PM mode change based on the PM bit in the Frame Control field immediately after receiving the ACK.

Furthermore, in order to prevent the race condition, if a STA operating on one link of a non-AP MLD, sends the cross link PM mode change on behalf of an other STA, the other STA can send the PM bit over its own link as long as the PM value is the same PM value as the one sent in the cross link PM signaling, according to some embodiments.

Figure 13B illustrates a second example scenario involving PM mode changes in which L1 is a STR link and L2 and L3 are EMI,SR links, according to some embodiments.
For example, Figure 13B illustrates AP-1 receiving a PMI including PM=1 for L2 and L3 in addition to timing information related to the change in PM modes. Accordingly, AP-1 can transmit an ACK to STA-1 to confirm that the PMI frame was received. Furthermore, the timing information can correspond to a timing offset associated with a time between the PMI being received and a time t=T0 at which STA-2 and STA-3 should be in a PS mode. In other words, the timing offset can correspond to a time period for STA-2 and STA-3 to transition to a PS mode or from a PS mode (e.g., to an active mode) after the AP MLD's reception of the PMI frame. Furthermore, AP-1 can utilize this timing offset window to provide, via cross link signaling, the PM mode change information (included in the PMI) to the other links (e.g., L2 and L3), according to some embodiments. Accordingly, once AP-2 and AP-3 receive the appropriate PMI information via the cross link signaling, STA-2 and STA-3 can be characterized as being in a PS mode at time t=T0.

Figure 13C illustrates a third example scenario involving PM mode changes in which L1 is a STR link and L2 and L3 are EMI,SR links, according to some embodiments. However, if L3 is very busy, it can be beneficial to operate L2 as a SL EMI,SR, according to some embodiments. For example, transitioning a SL EMI,SR to a PS mode or from a PS mode (e.g., to an active mode) instead of explicitly enabling/disabling an EMI,SR link (e.g., L3) via an EML OMN frame exchange can be a more efficient use of the non-AP MLDs resources and/or power. Accordingly, in order to transition STA-3 to a PS mode or from a PS mode (e.g., to an active mode), Figure 13B illustrates AP-2 receiving a PMI including PM=1 (or PM=0 corresponding to a change from a PS mode to an active mode) for L3 in addition to timing information related to the change in PM modes. Accordingly, AP-2 can transmit an ACK to STA-2 to confirm that the PMI frame was received. Furthermore, the timing information included in the PMI frame can correspond to a timing offset associated with a time between the PMI being received by AP-2 and a time t=T0 at which STA-3 should be in a PS mode. In other words, the timing offset can correspond to a time period for L3 to transition to a PS mode or from a PS mode (e.g., to an active mode) after the AP-2's reception of the PMI frame. Furthermore, AP-2 can utilize this timing offset window to provide, via cross link signaling, the PM mode change information (included in the PMI) to AP-3, according to some embodiments. Accordingly, once AP-3 receives the appropriate PMI information via the cross link signaling, STA-3 can be considered as being in a PS mode at time t=T0 and STA-2 can perform as a SL-EMLSR on L2 after t=T0, according to some embodiments.

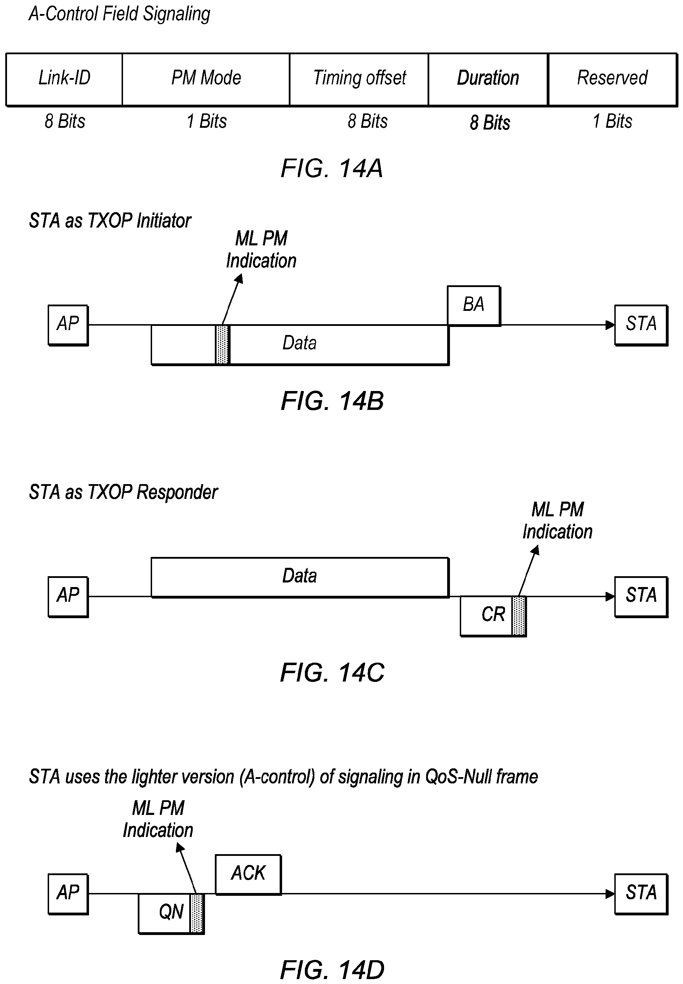

### Figures 14A-D - Signaling Options for Enhanced Power Management of MLDs

Figures 14A-D illustrate signaling options and aspects for enhanced methods of PM for MLDs, according to some embodiments. For example, Figure 14A illustrates an example format of an A-Control field which can be used in PM mode change indication signaling, according to some embodiments. Furthermore, Figure 14A illustrates a more compact and/or lighter (e.g., smaller memory size) version or format of signaling (as compared to that of Figure 12) that can be used in the A-Control field signaling. Accordingly, this smaller format can be beneficial by allowing it to be included in the media access control (MAC) protocol data units (MPDUs) used by a STA as a transmission opportunity (TXOP) initiator or alternatively in a control response (CR) frame used by a STA as the TXOP responder, according to some embodiments. For example, Figure 14A illustrates an A-Control field signaling format including 8 bits for Link-IDs and 1 bit for a PM Mode indication. According to some embodiments, a maximum of 8 links can be supported in a MLD device and therefore 1 bit for the PM mode and 8 bits for link indication can allow for independent per-link PM mode changes (for up to 8 links). Furthermore, the A-Control field signaling format can include advance timing indication in the timing offset subfield, according to some embodiments. For example, a timing offset subfield with 8 bits and 64µs resolution could provide maximum timing information up to 16.3ms, and Duration field with 8 bits and 512us resolution could provide a maximum duration up to 131ms.

According to some embodiments, the A-Control field signaling format can be considered a lighter version of signaling as compared to the enhanced scheduled multi-link PM mode indication signaling illustrated in Figure 12. For example and as illustrated in Figure 14A, the A-Control subfields can only use 26 bits, according to some embodiments. Therefore the A-Control field signaling format cannot fit all the fields that can be present in multi-link PM mode indication signaling illustrated in Figure 12 such as a PMI frame. Accordingly, the duration and presence control are not present in the A-Control field signaling format and the number of bits for link-ID, PM mode, and timing offset in the A-Control field signaling format are less than those of a PMI frame. However, it is possible that the A-Control field signaling can be added to a MPDU implicitly (as part of the MPDU MAC header) and be sent in UL to the AP, according to some embodiments. Alternatively, the A-Control field signaling can be added in control response (CR) frame (e.g., a block acknowledgement (BA) frame), according to some embodiments.

For example, Figure 14B illustrates a first example scenario in which the STA is a TXOP initiator, according to some embodiments. Furthermore, Figure 14B illustrates how the A-Control field signaling can be included in the MPDUs when the STA as the initiator of a TXOP. For example, a STA can include a ML PM indication (via the A-Control field) in a data transmission from the STA to the AP, according to some embodiments. Accordingly, the AP can transmit a block acknowledgement (BA) to the STA to confirm reception of the data transmission (and therefore the ML PM indication).

Figure 14C illustrates a second example scenario in which the STA is the TXOP responder, according to some embodiments. Furthermore, Figure 14C illustrates how the A-Control field signaling can be included in the CR frame when the STA is the TXOP responder. For example, the AP can transmit data to the STA and the STA can respond via a CR frame, according to some embodiments. Moreover, the STA can include, in the CR frame, a ML PM indication (via the A-Control field) so as to provide the ML PM indication to the AP.

Figure 14D illustrates a third example scenario in which the A-Control field signaling can be included in the QN frame transmitted by the STA, according to some embodiments. For example, the STA can transmit the QN frame and use the lighter A-Control field format described in Figure 14A to include the ML PM indication in the QN frame. Accordingly, the AP can transmit an ACK to the STA to confirm reception of the QN (and therefore the ML PM indication).

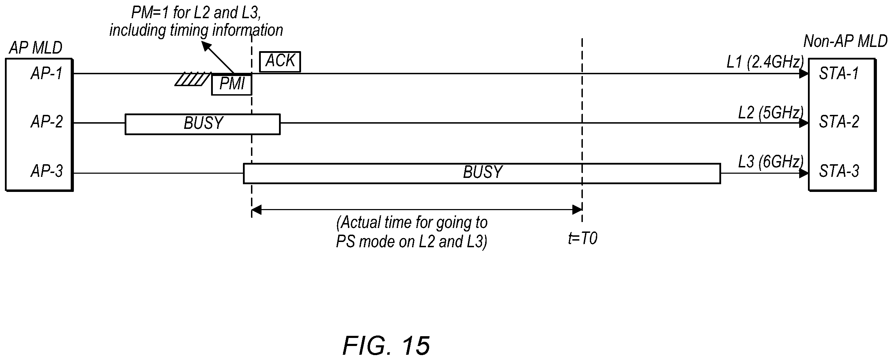

### Figure 15 - Leaky AP Issue

Figure 15 illustrates an example scenario involving PM between an AP MLD and a non-AP MLD in which the AP MLD has a "leaky" AP issue, according to some embodiments. For example, when the STAs provide the PMI to the AP and the STAs transition to a PS mode (e.g., PM=1) or from a PS mode (e.g., PM=0 corresponding to an active mode), it can take time for the AP to take the STA's PM=1 indication into account and accordingly the AP can continue to send DL traffic. However, as the indicated STAs are considered to be in PS mode and a sleep state, the DL traffic cannot be properly received by the STAs. Accordingly, it can be beneficial to prevent unnecessary or non-useful DL transmissions to STAs in PS modes.

For example, when the non-AP MLD provides the PMI (including scheduled timing information) to the AP MLD, the AP MLD can be made aware of a time at which the indicated STAs will be in PS mode (e.g., t=T0). Accordingly, the AP MLD should not send any packets to the STAs that are indicated to be in PS mode after the scheduled time (e.g., after T0), according to some embodiments. For example and with regard to Figure 15, after T0, STA-2 and STA-3 can be considered to be in a PS mode and sleep state. Therefore, it can be beneficial for the AP MLD to ensure that no packets will be sent in DL to STA-2 and STA-3 while they are in PS mode.

Furthermore, efficiently exiting a PS mode or transitioning back to an active mode is also important aspect to consider. For example, it can be undesirable for an AP MLD to take a considerable amount of time before being able to deliver packets on all the links. In other words, it can be further beneficial for the AP MLD to be aware of how long the STA(s) will be in a PS mode so that the AP MLD is ready to transmit data as soon as the STA(s) exit the PS mode. In some embodiments, the optional duration field of the scheduled ML PM signaling illustrated in Figure 12 can assist in such a scenario such that the AP MLD can transmit packets to the STA in all the links after this duration (e.g., after the STA(s) enter an active mode). Additionally, if the STA indicates the duration of staying in a PS mode but decides to exit PS mode earlier, the STA can still send a frame containing an active mode indication, according to some embodiments. In other words, if the STA transitions out of its sleep state to an awake state, the STA can inform the AP that it is in active mode (e.g., an awake state).

Additionally, while the above examples and figures primarily describe embodiments directed toward transitioning from an active mode to a PS mode (e.g., via a PM=1 indication), additional embodiments are envisioned. For example, the techniques described herein could also be applied to embodiments directed toward transitioning to an active mode from a PS mode (e.g., via a PM=0 indication).

### Example Embodiments

In some embodiments, a method can include establishing at least two wireless links with an access point (AP) multi-link device (MLD) comprising at least a first AP and a second AP and receiving, from the AP MLD, signaling comprising first timing information. The method can include determining, based on the first timing information, second timing information and transmitting a frame comprising a link identifier (ID) associated with at least one of the at least two wireless links, a power management (PM) mode indicator, and the second timing information. Additionally, the method can include receiving an acknowledgement (ACK) frame, wherein subsequent to receiving the ACK frame and based on the link ID and the PM mode indicator, one or more non-AP stations (STAs) of a non-AP MLD are transitioned, at a time associated with the second timing information, to a power saving (PS) mode.

According to some embodiments, the second timing information can include a timing synchronization function (TSF). Additionally, the first timing information can include cross link information exchange timing between any two APs of the AP MLD, according to some embodiments. According to some embodiments, the cross link information exchange timing can be received during one of an association procedure, a beaconing procedure, or an enhanced multi-link (EML) operating mode notification (OMN) request and response mechanism. In some embodiments, the signaling can include information indicating which of the at least two wireless links support cross link signaling. Furthermore, the second timing information can include a timing offset or an absolute timing synchronization function (TSF) between a time at which the frame is transmitted and a time at which the one or more non-AP STAs are transitioned to the PS mode. According to further embodiments, the frame can further include duration information associated with a duration of time in which the one or more non-AP STAs are in the PS mode. Additionally, the frame can be a power management indication (PMI) frame.

In some embodiments, an apparatus can include a processor configured to, when executing instructions stored in a memory, cause a non-access point (non-AP) multi-link device (MLD) comprising one or more non-AP stations (STAs) to perform operations including establishing at least two wireless links with an access point (AP) MLD comprising at least a first AP and a second AP. Additionally the operations can include receiving, from the AP MLD, signaling comprising first timing information and determining, based at least in part on the first timing information, second timing information. Furthermore, the operations can include transmitting, to the AP MLD, a frame comprising at least one link identifier (ID) associated with at least one of the at least two wireless links, a power management (PM) mode indicator, at least a portion of the second timing information, and duration information. The operations can additionally include receiving, from the AP MLD, an acknowledgement (ACK) frame, wherein subsequent to receiving the ACK frame and based at least in part on the at least one link ID and the PM mode indicator, the one or more non-AP STAs of the non-AP MLD are transitioned from a power saving (PS) mode to an active mode at a time associated with the second timing information, according to some embodiments.

According to some embodiments, the PM mode indicator can be a bit value equal to 0 to indicate the transition of the one or more non-AP STAs to the active mode. Additionally or alternatively, the frame can be transmitted using A-Control field signaling. In some embodiments, the A-Control field signaling can include at least one of an 8-bit Link-ID subfield, a 1-bit PM mode subfield, an 8-bit Timing Offset subfield, an 8-bit Duration subfield, or an 1-bit Reserved subfield. According to some embodiments, the A-Control field signaling can be included in a media access control protocol data unit (MPDU), a control response (CR) frame, or a quality of service null (QN) frame.

According to other embodiments, a method can include establishing at least two wireless links with a non-access point (non-AP) multi-link device (MLD) comprising at least two non-AP stations (STAs). The method can further include transmitting, to the non-AP MLD, signaling comprising first timing information and receiving, from the non-AP MLD, a frame comprising at least one link identifier (ID) associated with at least one of the at least two wireless links, a power management (PM) mode indicator, and second timing information. Additionally, the method can include transmitting, to the non-AP MLD, an acknowledgement (ACK) frame and determining, based at least in part on the at least one link ID and the PM mode indicator, that one or more non-AP STAs of the non-AP MLD are transitioned to a power saving (PS) mode at a time associated with the second timing information.

In some embodiments, the method can include providing, via cross link signaling, the at least one link ID and PM mode indicator to one or more wireless links of the at least two wireless links. Additionally, the method can include refraining from communicating with the one or more non-AP STAs while the one or more non-AP STAs are in the PS mode. According to some embodiments, the at least two wireless links can be simultaneous transmission and reception (STR) links. In other embodiments, one or more of the at least two wireless links can be enhanced multi-link single radio (EMLSR) links or single link enhanced multi-link single radio (SL-EMI,SR) links. Additionally, the the first timing information can include cross link information exchange timing between at least any two APs of the AP. Furthermore, the cross link information exchange timing can be received during one of an association procedure, a beaconing procedure, or an enhanced multi-link (EML) operating mode notification (OMN) request and response mechanism, according to some embodiments.

Embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a wireless device can be configured to include a processor (and/or a set of processors) and a memory medium, where the memory medium stores program instructions, where the processor is configured to read and execute the program instructions from the memory medium, where the program instructions are executable to cause the wireless device to implement any of the various method embodiments described herein (or, any combination of the method embodiments described herein, or, any subset of any of the method embodiments described herein, or, any combination of such subsets). The device can be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
by a non-access point, non-AP, multi-link device, MLD, comprising one or more non-AP stations, STAs:
establishing at least two wireless links with an access point, AP, MLD comprising at least a first AP and a second AP;
receiving, from the AP MLD, signaling comprising first timing information;
determining, based at least in part on the first timing information, second timing information;
transmitting, to the first AP, a frame comprising at least one link identifier, ID, associated with at least one of the at least two wireless links, a power management, PM, mode indicator, and at least a portion of the second timing information; and
receiving, from the first AP, an acknowledgement, ACK, frame, wherein subsequent to receiving the ACK frame and based at least in part on the at least one link ID and the PM mode indicator, the one or more non-AP STAs of the non-AP MLD are transitioned, at a time associated with the second timing information, to a power saving, PS, mode.

2. The method of claim 1, wherein the second timing information comprises a timing synchronization function, TSF.

3. The method of claim 1 or claim 2, wherein the first timing information comprises cross link information exchange timing between at least any two APs of the AP MLD.

4. The method of claim 3, wherein the cross link information exchange timing is received during one of:
an association procedure;
a beaconing procedure; or
an enhanced multi-link, EML, operating mode notification, OMN, request and response mechanism.

5. The method of any preceding claim, wherein the signaling further comprises information indicating which of the at least two wireless links support cross link signaling.

6. The method of any preceding claim, wherein the second timing information comprises a timing offset or an absolute timing synchronization function, TSF, between a time at which the frame is transmitted and a time at which the one or more non-AP STAs are transitioned to the PS mode.

7. The method of any preceding claim, wherein the frame further comprises duration information associated with a duration of time in which the one or more non-AP STAs are in the PS mode.

8. The method of any preceding claim, wherein the frame is a power management indication, PMI, frame.

9. An apparatus, comprising:
a processor configured to, when executing instructions stored in a memory, cause a non-access point, non-AP, multi-link device, MLD, comprising one or more non-AP stations, STAs, to perform operations comprising:
establishing at least two wireless links with an access point, AP, MLD comprising at least a first AP and a second AP;
receiving, from the AP MLD, signaling comprising first timing information;
determining, based at least in part on the first timing information, second timing information;
transmitting, to the first AP MLD, a frame comprising at least one link identifier, ID, associated with at least one of the at least two wireless links, a power management, PM, mode indicator, at least a portion of the second timing information, and duration information; and
receiving, from the first AP MLD, an acknowledgement, ACK, frame, wherein subsequent to receiving the ACK frame and based at least in part on the at least one link ID and the PM mode indicator, the one or more non-AP STAs of the non-AP MLD are transitioned from a power saving, PS, mode to an active mode at a time associated with the second timing information.

10. The apparatus of claim 9, wherein the PM mode indicator is a bit value equal to 0 to indicate the transition of the one or more non-AP STAs to the active mode.

11. The apparatus of claim 9, wherein the frame is transmitted using A-Control field signaling.

12. The apparatus of claim 11, wherein the A-Control field signaling comprises at least one of the following:
an 8-bit Link-ID subfield;
a 1-bit PM mode subfield;
a 8-bit Timing Offset subfield;
a 8-bit Duration subfield; or
a 1-bit Reserved subfield.

13. The apparatus of claim 11, wherein the A-Control field signaling is comprised in one of:
a media access control protocol data unit, MPDU;
a control response, CR, frame; or
a quality of service null, QN, frame.

14. A method, comprising:
establishing at least two wireless links with a non-access point, non-AP, multi-link device, MLD, comprising at least two non-AP stations, STAs;
transmitting, to the non-AP MLD, signaling comprising first timing information;
receiving, from the non-AP MLD, a frame comprising at least one link identifier, ID, associated with at least one of the at least two wireless links, a power management, PM, mode indicator, and second timing information; and
transmitting, to the non-AP MLD, an acknowledgement, ACK, frame; and
determining, based at least in part on the at least one link ID and the PM mode indicator, that one or more non-AP STAs of the non-AP MLD are transitioned to a power saving, PS, mode at a time associated with the second timing information.

15. The method of claim 14, further comprising:
providing, via cross link signaling, the at least one link ID and the PM mode indicator to one or more wireless links of the at least two wireless links.
